Europäisches Patentamt

European Patent Office

Office européen des brevets

(11) Veröffentlichungsnummer: **0 443 148 A1**

## (12) EUROPÄISCHE PATENTANMELDUNG

(21) Anmeldenummer: 90124330.3

(22) Anmeldetag: **15.12.90**

(51) Int. Cl.5: **G01D 5/243**, G01D 5/20

(30) Priorität: **09.02.90 DE 4003902**

(43) Veröffentlichungstag der Anmeldung:
**28.08.91 Patentblatt 91/35**

(84) Benannte Vertragsstaaten:
**DE ES FR GB**

(71) Anmelder: **ROBERT BOSCH GMBH**
**Postfach 50**
**W-7000 Stuttgart 1(DE)**

(72) Erfinder: **Hecht, Hans, Dipl.-Phys.**
**Hebichstrasse 12**
**W-7015 Korntal(DE)**

(54) Stellungsgeber.

(57) Die Erfindung betrifft einen Stellungsgeber mit mehreren, hintereinander liegend angeordneten Geberelementen und einem mit diesen zusammenwirkenden Stellungsaufnehmer. Für die Gewinnung fehlerfreier Meßergebnisse ist vorgesehen, daß die Geberelemente (2-5) als mit unterschiedlicher Phasenlage gespeiste Primärspulen (6-9) ausgebildet sind und daß der Stellungsaufnehmer (10) eine mit der zu erfassenen Stellung ihre Lage zu den Primärspulen (6-9) verändernde Sekundärspule (11) aufweist, wobei die phasenlage einer in der Sekundärspule (11) induzierten Spannung ein Maß für die eingenommene Stellung ist.

Fig. 1

## STELLUNGSGEBER

### Stand der Technik

Die Erfindung betrifft einen Stellungsgeber mit mehreren, hintereinander liegend angeordneten Geberelementen und einem mit diesen zusammenwirkenden Stellungsaufnehmer.

Aus der DE-OS 34 42 212 ist ein Stellungsgeber bekannt, der als Potentiometer ausgebildet ist. Das Potentiometer weist mindestens zwei hintereinander liegend angeordnete Widerstandsbahnen auf, die von einem einen Stellungsaufnehmer bildenden Schleifer in Abhängigkeit von der eingenommenen Stellung beaufschlagt werden. Die Dimensionierung der einzelnen Widerstandsbahnen erfolgt in Abhängigkeit von der gewünschten Auflösung der Stellungserfassung. Es lassen sich daher Bereiche mit unterschiedlicher Kennliniensteigung kombinieren. Dies ist insbesondere bei Erfassungsaufgaben vorteilhaft, bei denen bestimmte Stellungsbereiche höher und daher exakter aufzulösen sind als die angrenzenden Bereiche.

Derartige Stellungsgeber werden in der Kraftfahrzeugtechnik z.B. zur Erfassung der Drosselklappenstellung eingesetzt. Für eine optimale Kraftstoffzumessung ist es erforderlich, im Bereich relativ kleiner Drosselklappenöffnungswinkel, das heißt im unteren Lastbereich, die Drosselklappenposition sehr exakt zu bestimmen. Dort ist daher eine höhere Auflösung erforderlich.

Grundsätzlich haben die bekannten, als Potentiometer ausgebildeten Stellungsgeber den Nachteil, daß die Genauigkeit des Meßergebnis' abhängig vom Spiel der beweglichen Teile ist und Verfälschungen des Meßergebnis' stets dann eintreten können, wenn Schleifer und/oder Widerstandsbahnen verschmutzt sind. Auch führt Verschleiß durch die sehr hohe Bewegungszyklenzahl zum Ausfall der Potentiometer.

### Vorteile der Erfindung

Der erfindungsgemäße Stellungsgeber mit den im Hauptanspruch genannten Merkmalen hat demgegenüber den Vorteil, daß die Stellungserfassung auf induktivem Wege, also berührungslos erfolgt. Auch führt aufgrund mechanischer Abnutzung oder Toleranzen auftretendes Spiel nicht zu einer spürbaren Meßwertveränderung. Insbesondere tritt am eigentlichen Geberelement kein Verschleiß auf. Bei einem als Drehwinkelanordnung aufgebauten Stellungsgeber wirkt sich daher eine Radial- und/oder Axialspiel nicht aus. Die Geberelemente des erfindungsgemäßen Stellungsgebers sind als mit unterschiedlicher Phasenlage gespeiste Primärspulen ausgebildet, die mit einer den Stellungsaufnehmer bildenden Sekundärspule zusammenwirken. Die Sekundärspule verändert mit der zu erfassenden Stellung ihre Lage zu den einzelnen Primärspulen, so daß die in ihr induzierte Spannung eine Phasenlage einnimmt, die von der jeweiligen Stellung abhängig ist. Durch Vergleich mit einer Referenzphasenlage kann daher die jeweils eingenommene Stellung ermittelt werden. Hierfür ist vorzugsweise eine Auswerteschaltung vorgesehen.

Nach einem Ausführungsbeispiel der Erfindung ist vorgesehen, daß mit der Sekundärspule eine an diese angeschlossene Übertragungsspule bewegt wird, die mit einer ortsfesten Empfangsspule zusammenwirkt, an der die Stellung als elektrische Phasenlage erfaßbar ist. Grundsätzlich kann die Übertragung des von der Sekundärspule erfaßten Werts über flexible Leitungen erfolgen und auf diese Weise der Auswerteschaltung zugeführt werden. Alternativ ist es jedoch auch -wie erwähnt- möglich, den Wert induktiv mittels Übertragungs- und Empfangsspule zu übertragen, so daß er an den ortsfesten Klemmen der Empfangsspule zur Verfügung steht. Mithin liegt eine berührungslose Übertragung vor.

Sofern die Primärspulen jeweils die gleiche Länge aufweisen, ist eine gleichmäßige Auflösung über den Meßbereich gegeben. Alternativ ist jedoch auch möglich, mindestens eine der Primärspulen kürzer oder länger als die übrigen Primärspulen auszubilden. Hierdurch ist eine unterschiedlich große Kennliniensteigung über den Stellbereich erzielt, das heißt, es liegt eine unterschiedliche Auflösung vor.

Vorteilhaft ist es, wenn für eine Drehwinkelerfassung die Primärspulen und/oder die Empfangsspule jeweils auf einem Kreis, insbesondere Teilkreis, angeordnet sind und daß die Sekundärspule und/oder die Übertragungsspule jeweils entlang einer Kreisbahn verlagerbar sind.

Besonders gute Übertragungsverhältnisse stellen sich ein, wenn die Formgebung der Primärspulen und/oder der Sekundärspule und/oder der Übertragungsspule und/oder der Empfangsspule dem jeweiligen Kreis angepaßt ist.

Ein vorteilhafter Aufbau ergibt sich, wenn die Sekundärspule oberhalb der Primärspulen angeordnet ist. Die Übertragungsspule kann ebenfalls oberhalb der Empfangsspule angeordnet sein. Ferner ist es möglich, daß die Primärspulen und die Empfangsspule in derselben Ebene liegen. Schließlich ist vorgesehen, daß die Sekundärspule und die Übertragungsspule ebenfalls in der gleichen Ebene angeordnet sind.

### Zeichnung

Die Erfindung wird im folgenden anhand der Figuren näher erläutert. Es zeigen:

Figur 1    einen Stellungsgeber in schematischer Darstellung,

Figur 2    ein Blockschaltbild mit einem weiteren Ausführungsbeispiel eines Stellungsgebers und

Figur 3    ein letztes Ausführungsbeispiel eines Stellungsgebers, der gegenüber dem der Figur 1 einen Meßbereich mit unterschiedlicher Auflösung besitzt.

Beschreibung von Ausführungsbeispielen

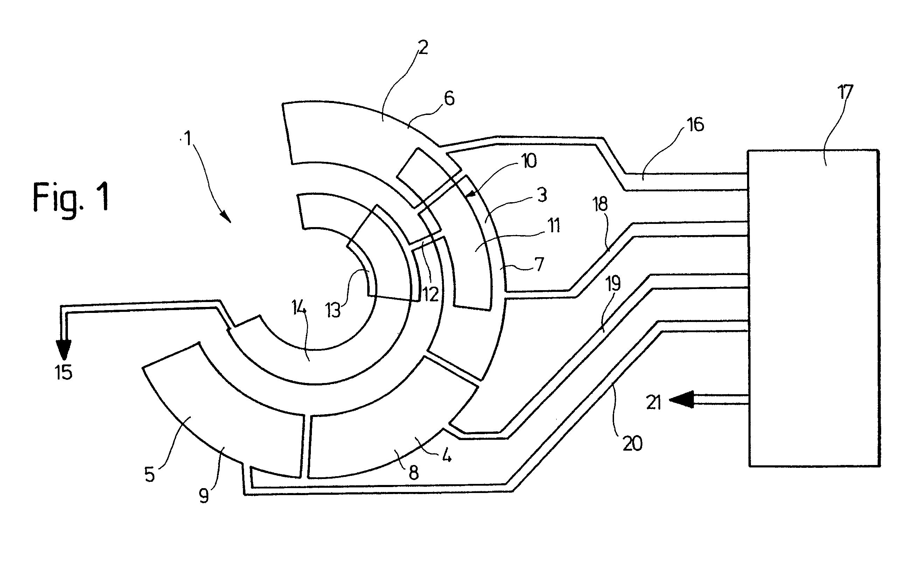

Die Figur 1 zeigt einen Stellungsgeber 1, der als Drehwinkelstellungsgeber ausgebildet ist. Er weist mehrere, hintereinander liegend angeordnete Geberelemente 2,3,4 und 5 auf, die als Primärspulen 6,7,8 und 9 ausgebildet sind. Die Primärspulen 6 bis 9 sind auf einem Teilkreis angeordnet.

Ferner ist ein Stellungsaufnehmer 10 vorgesehen, der seine Lage mit der zu erfassenden Stellung ändert. Der Stellungsaufnehmer 10 ist als Sekundärspule 11 ausgebildet. Sie läßt sich entlang einer Kreisbahn mittels einer nicht dargestellten, den Drehwinkel erfassenden Welle verlagern.

Über Leitungen 12 ist die Sekundärspule 11 an eine Übertragungsspule 13 angeschlossen, die zusammen mit der Sekundärspule 11 verlagert wird. Der Übertragungsspule 13 ist eine ortsfeste Empfangsspule 14 zugeordnet, die einen Ausgang 15 aufweist. Die Übertragungsspule 13 liegt ebenfalls auf einem Teilkreis. Dieses gilt auch für die Empfangsspule 14.

Vorzugsweise ist die Anordnung derart ausgebildet, daß die Sekundärspule 11 oberhalb der Primärspulen 6 bis 9 und daß die Übertragungsspule 13 oberhalb der Empfangsspule 14 liegt. Dabei können vorzugsweise die Primärspulen 6 bis 9 und die Empfangsspule 14 in derselben Ebene ausgebildet sein. Ferner können Sekundärspule 11 und Übertragungsspule 13 in der gleichen Ebene liegen. Sowohl die Primärspulen 6 bis 9, die Sekundärspule 11, die Übertragungsspule 13 und die Empfangsspule 14 sind der Form des jeweiligen Kreises beziehungsweise Teilkreises angepaßt.

Die Primärspule 6 ist über Leitungen 16 mit einer elektronische Schaltung 17 verbunden. Leitungen 18 verlaufen zwischen Primärspule 7 und elektronischer Schaltung 17. Die Primärspulen 8 und 9 stehen über Leitungen 19 und 20 mit der elektronischen Schaltung 17 in Verbindung. Der Ausgang 15 führt zu einem Anschluß 21 der elektronischen Schaltung 17.

Die elektronische Schaltung 17 speist die Primärspulen 6 bis 9 mit Strömen unterschiedlicher Phasenlage. So kann z.B. vorgesehen sein, daß die Primärspule 6 mit der Phasenlage 0°, die Primärspule 7 mit der Phasenlage 90°, die Primärspule 8 mit der Phasenlage 180° und die Primärspule 9 mit der Phasenlage 270° gespeist wird. Hieraus wird deutlich, daß -in Abhängigkeit von der Lage des Stellungsaufnehmers 10- in der Sekundärspule 11 eine Spannung mit entsprechender Phasenlage induziert wird. Diese Phasenlage ist ein Maß für die eingenommene Stellung des Stellungsaufnehmers 10. Die in der Sekundärspule 11 induzierte Spannung wird über die Leitungen 12 an die Übertragungsspule 13 gelegt, die ein entsprechendes Signal zur Empfangsspule 14 auf induktivem Wege überträgt. Am Ausgang 15 steht daher eine Meßspannung zur Verfügung, deren Phasenlage von der Drehwinkelstellung des Stellungsgebers 1 abhängig ist. Diese Spannung wird zum Anschluß 22 übertragen und von der elektronische Schaltung 17 ausgewertet.

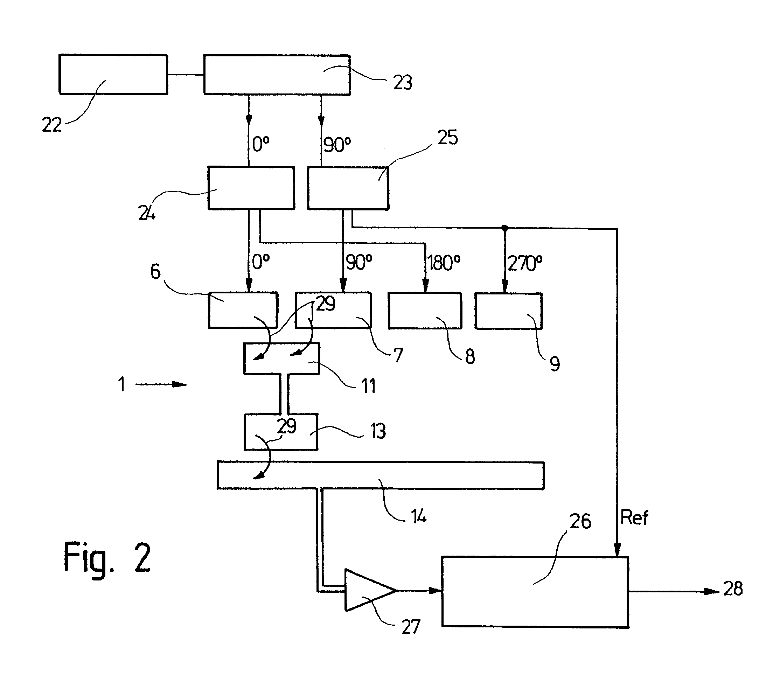

Die Figur 2 zeigt einen detaillierten Aufbau. Es ist ein Oszillator 22 vorgesehen, der an einen Frequenzteiler 23 angeschlossen ist. Dieser erzeugt ein Signal mit der Phasenlage 0°, das einem ersten Treiber 24 zugeführt wird. Ein weiteres Signal mit einer Phasenlage von 90° wird zu einem zweiten Treiber 25 geleitet. Der erste Treiber 24 steuert mit dem 0°-Phasensignal die Primärspule 6 und mit einem 180°-Phasensignal die Primärspule 8 an. Der zweite Treiber 25 leitet der Primärspule 7 ein 90°-Phasensignal und der Primärspule 9 ein 270°-Phasensignal zu. Letzteres wird zu einer Auswerteschaltung 26 übertragen. Es bildet ein Referenzsignal Ref. Der Ausgang der Empfangsspule 14 ist an einen Vorverstärker 27 angeschlossen, dessen Ausgang zur Auswerteschaltung 26 führt. An einem Ausgang 28 steht ein Signal zur Verfügung, dessen Phasenlage ein Maß für die Stellung des Stellungsgebers 1 bildet.

Im Gegensatz zum Ausführungsbeispiel der Figur 1 ist der Stellungsgeber 1 der Figur 2 als Lineargeber ausgebildet, das heißt, der Stellungsaufnehmer 10 wird entlang eines geradlinigen Weges verlagert. Die Pfeile 29 deuten an, daß die Primärspulen 6 bis 9 mit der Sekundärspule 11 und die Übertragungsspule 13 mit der Empfangsspule 14 induktiv zusammenwirken.

Die einzelnen Komponenten, wie Oszillator 22, Frequenzteiler 23, Treiber 24 und 25 sowie Vorverstärker 27 und Auswerteschaltung 26 können in einem integrierten Schaltkreis als elektronische Schaltung 17 zusammengefaßt sein.

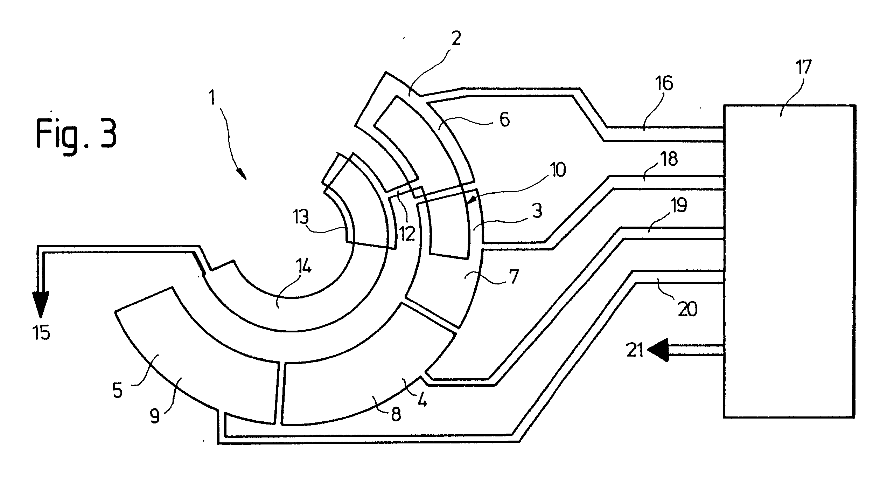

Die Figur 3 zeigt ein weiteres Ausführungsbeispiel, das sich von dem der Figur 1 dadurch unterscheidet, daß die Primärspulen 6 und 7 gegenüber den Primärspulen 8 und 9 kürzer ausgebildet sind. Im Ausführungsbeispiel der Figur 1 weisen die Primärspulen 6 bis 9 jeweils die gleiche Länge auf. Dieselbe Länge besitzt dort auch die Sekundärspule 1. Insofern ist die Auflösung über den gesamten Stellbereich überall gleich groß. Dies gilt nicht für das Ausführungsbeispiel der Figur 3. Dort ist im die Primärspulen 6 und 7 betreffenden Drehwinkelbereich eine größere Auflösung dadurch erzielt, daß die Primärspulen 6 und 7 gegenüber den Primärspulen 8 und 9 kürzer ausgebildet sind. Die Sekundärspule 11 weist einen Länge auf, die den Primärspulen 8 und 9 entspricht. Betrachtet man daher den Drehwinkelbereich, so erfolgt zunächst eine sehr hohe Auflösung, die dann -im Bereich der Primärspulen 8 und 9- kleiner wird. Unterschiedliche Spulenlängen beziehen sich auf die geometrischen Ausgestaltungen. Die Windungszahlen und der Grad der Erregungen sind bei allen Primärspulen 6 bis 9 gleich groß. Eine unterschiedliche Auflösung über den Meßbereich läßt sich zusätzlich oder alternativ auch dadurch erzielen, daß unterschiedliche Windungszahlen und/oder Erregungen eingesetzt werden.

Die Erfindung ist nicht -wie in der Beschreibungseinleitung erwähnt- auf die Erfassung der Drosselklappenwinkelstellung einer Brennkraftmaschine beschränkt, sondern kann überall dort angewendet werden, wo eine Stellung zu erfassen ist. Da die Anordnung nach dem induktiven Prinzip funktioniert, arbeitet sie kontaktlos und daher störungsunanfällig. Radial- und Axialspiel im Hinblick der Rotorebene gegenüber der Staturebene führt nicht zu Meßwertveränderungen. Die Betriebsfrequenz der Anordnung kann relativ niedrig sein, so daß die Anwendung in Kraftfahrzeugen möglich ist, ohne daß besondere Abschirmmaßnahmen zu ergreifen sind. Es besteht daher eine hohe elektromagnetische Verträglichkeit.

Der Erfindungsgegenstand läßt sich mittels unterschiedlicher Herstellungsverfahren fertigen. Ausführungen in Mehrlagen-Dickschichtschaltungstechnik, Mehrlagen-Leiterplattentechnik, Green-Tape-Technik oder Mehrlagen-Folienschaltungstechnik sind möglich. Bei entsprechender Anpassung der Elektronik an die Spulendaten sind auch einlagige Herstellverfahren einsetzbar. Aus den Figuren 1 und 3 ist erkennbar, daß das Zentrum der Anordnung frei bleibt für die Drehachse. Die Elektronik erfordert keine besondere Frequenzstabilität.

**Patentansprüche**

1. Stellungsgeber mit mehreren, hintereinander liegend angeordneten Geberelementen und einem mit diesen zusammenwirkenden Stellungsaufnehmer, **dadurch gekennzeichnet**, daß die Geberelemente (2-5) als mit unterschiedlicher Phasenlage gespeiste Primärspulen (6-9) ausgebildet sind und daß der Stellungsaufnehmer (10) eine mit der zu erfassenen Stellung ihre Lage zu den Primärspulen (6-9) verändernde Sekundärspule (11) aufweist, wobei die Phasenlage einer in der Sekundärspule (11) induzierten Spannung ein Maß für die eingenommene Stellung ist.

2. Stellungsgeber nach Anspruch 1, **dadurch gekennzeichnet**, daß mit der Sekundärspule (11) eine an diese angeschlossene Übertragungsspule (13) bewegt wird, die mit einer ortsfesten Empfangsspule (14) zusammenwirkt, an der die erfaßte Stellung als elektrische Phasenlage erfaßt wird.

3. Stellungsgeber nach einem der vorhergehenden Ansprüche, **dadurch gekennzeichnet**, daß die Primärspulen (6-9) jeweils die gleiche Länge wie die Sekundärspule (11) aufweist.

4. Stellungsgeber nach einem der vorhergehenden Ansprüche, **dadurch gekennzeichnet**, daß mindestens eine der Primärspulen (6-9) kürzer oder länger als die übrigen Primärspulen (6-9) ist.

5. Stellungsgeber nach einem der vorhergehenden Ansprüche, **dadurch gekennzeichnet**, daß für eine Drehwinkelerfassung die Primärspulen (6-9) und/oder die Empfangsspule (14) auf jeweils einem Kreis, insbesondere Teilkreis, angeordnet sind und daß die Sekundärspule (11) und/oder die Übertragungsspule (13) jeweils entlang einer Kreisbahn verlagerbar ist.

6. Stellungsgeber nach einem der vorhergehenden Ansprüche, **dadurch gekennzeichnet**, daß die Formgebung der Primärspulen (6-9) und/oder der Sekundärspule (11) und/oder der Übertragungsspule (13) und/oder der Empfangsspule (14) dem jeweiligen Kreis angepaßt ist.

7. Stellungsgeber nach einem der vorhergehenden Ansprüche, **dadurch gekennzeichnet**, daß die Sekundärspule (11) oberhalb der Primärspulen (6-9) angeordnet ist.

8. Stellungsgeber nach einem der vorhergehenden Ansprüche, **dadurch gekennzeichnet**, daß die Übertragungsspule (13) oberhalb der Empfangsspule (14) liegt.

9. Stellungsgeber nach einem der vorhergehenden Ansprüche, **dadurch gekennzeichnet**, daß die Primärspulen (6-9) und die Empfangsspule (14) in derselben Ebene liegen.

10. Stellungsgeber nach einem der vorhergehenden Ansprüche, **dadurch gekennzeichnet**, daß die Sekundärspule (11) und die Übertragungsspule (13) in der gleichen Ebene liegen.

Fig. 1

Fig. 2

EP 0 443 148 A1

Fig. 3

EP 0 443 148 A1

**Europäisches Patentamt**

**EUROPÄISCHER RECHERCHENBERICHT**

Nummer der Anmeldung

**EP 90 12 4330**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 159 191 (VERIFY ELECTRONICS LTD)<br>* Ganzes Dokument *<br>- - - | 1-10 | G 01 D 5/243<br>G 01 D 5/20 |
| X | GB-A-2 089 511 (PNEUMO CORP.)<br>* Ganzes Dokument *<br>- - - | 1,3 | |
| X | US-A-3 772 587 (INDUCTOSYN CORP.)<br>* Spalte 1, Linie 4 - Spalte 2, Linie 2; Spalte 3, Linie 65 - Spalte 10; Spalte 12, Linie 8 - Spalte 15, Linie 5; Spalte 17, Linie 56 - Spalte 25, Linie 12; Figuren *<br>- - - | 1,3,4,5,6,<br>7,9 | |
| A | GB-A-1 406 217 (NRDC)<br>* Ganzes Dokument *<br>- - - | 1,2,7,9 | |
| A | GB-A-2 206 412 (ROYAL MELBOURNE INSTITUTE OF TECHNOLOGY)<br>* Ganzes Dokument *<br>- - - - - | 1,5,6,7,8 | |

| RECHERCHIERTE SACHGEBIETE (Int. Cl.5) |
|---|
| G 01 D 5/243<br>G 01 D 5/20<br>G 01 D 5/22 |

Der vorliegende Recherchenbericht wurde für alle Patentansprüche erstellt

| Recherchenort | Abschlußdatum der Recherche | Prüfer |
|---|---|---|
| Den Haag | 17 Mai 91 | BROCK T.J. |